Europäisches Patentamt

(19) European Patent Office

Office européen des brevets

(11) Publication number: **0 021 474**
**A1**

## (12) EUROPEAN PATENT APPLICATION

(21) Application number: **80200492.9**

(22) Date of filing: **23.05.80**

(51) Int. Cl.³: **C 01 F 11/46**

(30) Priority: **30.05.79 NL 7904234**

(43) Date of publication of application:
**07.01.81 Bulletin 81/1**

(84) Designated Contracting States:
**AT BE DE FR GB IT NL SE**

(71) Applicant: **UNIE VAN KUNSTMESTFABRIEKEN B.V.**
**Postbus 45**
**NL-3500 AA Utrecht(NL)**

(72) Inventor: **Smit, Andreas Christiaan Michael**
**Willem de Zwijgerweg 121**
**NL-4191 WD Geldermalsen(NL)**

(72) Inventor: **Weterings, Cornelis Antonius Maria**
**Schinekstraat 60**
**NL-6171 BD Stein(NL)**

(74) Representative: **Roeffen, Wilhelmus Johannes**
**Maria et al,**
**OCTROOIBUREAU DSM Postbus 9**
**NL-6160 MA Geleen(NL)**

(54) **Process for preparing calcium sulphate hemihydrate, and hemihydrate so obtained.**

(57) Process for preparing calciumsulphate hemihydrate by recrystallizing calciumsulphate dihydrate, e.g. gypsum obtained by digestion of phosphate ore, using concentrated nitric acid at elevated temperatures. The diluted acid is concentrated by absorption of nitrous gases and recycled in the process.

EP 0 021 474 A1

Croydon Printing Company Ltd.

UNIE VAN KUNSTMESTFABRIEKEN B.V.

0021474

TITLE MODIFIED
see front page

## PROCESS FOR PREPARING CALCIUM SULPHATE HEMIHYDRATE

The invention relates to a process for preparing calcium sulphate hemihydrate by recrystallizing calcium sulphate dihydrate with the aid of concentrated nitric acid at elevated temperature and separating from the recrystallization liquor the calciumsulphate hemihydrate formed.

Such a process is known from Netherlands patent application laid open for public inspection 7,309,394. In the process described there, calcium sulphate dihydrate is recrystallized at a temperature of between 22 and 100 $^{\circ}$C with the aid of nitric acid with a concentration of between 30 and 80 wt.%. The nitric acid-containing liquor remaining after separation of the calcium sulphate hemihydrate can if so desired be used further in a fertilizer plant.

A disadvantage of this known process is that for the recrystallization fresh, concentrated nitric acid must always be supplied, while the dilute acid remaining after the recrystallization is suitable only for the preparation of low-grade fertilizers.

The present invention provides a process in which the aforementioned disadvantages are virtually or completely obviated.

According to the invention this is achieved by concentrating the recrystallization liquor through absorption of nitrous gases and using the acidic liquor thus concentrated at least in part for the recrystallization.

In this way it is possible to perform the recrystallization wholly or partly with continuously circulating, concentrated recrystallization liquor, any remaining nitric acid being at the same time so concentrated as to be suitable for processing to high-grade fertilizers.

The concentration of the diluted recrystallization liquor by absorption of nitrous gases is preferably performed by a method known per se in one or more absorption columns through which the liquor is passed countercurrently to a gas mixture containing nitric oxides, as is for instance obtained in the catalytic oxidation of ammonia. The quantity of nitric oxides that is to be absorbed in the liquor is mainly dependent on the concentration of the recrystallization liquor before

2

and after recrystallization. Nitric acid with a concentration of 35 to 70 wt. %, more specifically 45 to 65 wt. %, is preferably employed as recrystallization liquor. At a nitric acid concentration of below 35 wt. %, recrystallization proceeds fairly slowly unless very high temperatures are applied. There are no objections to a nitric acid concentration of above 70 wt. % being used, but this does not yield any additional advantages. Depending on the quantity and the water content of the of recrystallized calcium sulphate dihydrate, a nitric-acid-containing liquor with an $HNO_3$ concentration of 29 to 55 wt. %, more specifically 38 to 45 wt.%, results after recrystallization and separation of the calcium sulphate hemihydrate formed.

The process according to the invention can be applied for the recrystallization of both natural gypsum and synthetic calcium sulphate dihydrate, in particular synthetic dihydrate obtained as a byproduct in the digestion of phosphate ore with mineral acids. A dihydrate of this kind always contains impurities from the phosphate ore to a greater or lesser extent and can as such not be used for processing in, say, the building, paper, paint or plastics industry.

It has been found that the calcium sulphate hemihydrate obtained in the recrystallization according to the invention is virtually free of interfering impurities and is for this reason very suitable for processing to constructional elements, coating agent in paper and filler for paper, paint and plastics.

In the process according to the invention, so-called phospho-gypsum can thus be used as calcium sulphate dihydrate. This is dihydrate obtained as byproduct in the preparation of phosphoric acid by diges-tion of phosphate ore with sulphuric acid.

The process according to the invention is pre-eminently suitable for recrystallizing so-called nitro-gypsum. This is calcium sulphate dihydrate obtained by digestion of phosphate ore with nitric acid and precipitation of the calcium from the digestion liquor by adding a sulphate-containing reagent, in particular ammonium sulphate. A dihydrate of this kind always contains to a greater or lesser extent cocrystallized phosphate. In recrystallization with nitric acid, the resulting hemihydrate is found to be virtually free of phosphate. It is of advantage to partly recycle the diluted, nitric acid-liquor resulting after recrystallization, which contains phosphate and various impurities, to the rock phosphate digestion zone after concentration. It is thus effected that all the phosphate cocrystallized with the gypsum is recycled to the process again.

Such an embodiment also offers the possibility of varying the quantity of nitric acid in the digestion zone. In the existing digestion processes it is usual to carry out the digestion with at least a stoichiometric quantity of nitric acid, preferably even with an excess of nitric acid, to achieve efficient digestion. For in .digestion with a deficiency of nitric acid there remains a quantity of calcium phosphate in the digestion liquor that precipitates out with the gypsum to an increased extent and is thus lost as nutrient material. With the process according to the invention, however, it is possible to perform the digestion with a deficiency of nitric acid, because practically all the phosphate passes from the gypsum to the recrystallization liquor during recrystallization and is therewith recirculated back to the process. The advantage of being able to vary the quantity of nitric acid in the digestion is that a wider range of fertilizer compositions can be produced, namely compositions with lower N : P ratios.

An additional advantage in a recirculation process of this kind is that the water balance of the process is considerably improved. In digestion of phosphate ore with nitric acid without gypsum recrystallization the gypsum is usually washed with a very large quantity of water after it has been filtered off to separate the phosphate components adhering to the gypsum. The contaminated washing water is then added to the N-P liquor. By this means this liquor is diluted to such an extent that it should be concentrated by evaporation, for instance, before being able to be processed to fertilizer products, particularly in solid form. With the process according to the invention the gypsum filtered off is not washed with water, because the phosphate components adhering to the gypsum pass to the recrystallization liquor in recrystallization and are recycled back to the process. The N-P liquor resulting in this process thus contains considerably less water, so that the cost of evaporation is substantially lower.

It is true that with the process according to Netherlands application laid open for public inspection 7,309,394 the gypsum filtered off does not have to be washed with water either, because here too the impurities adhering to the gypsum pass to the recrystallization liquor. This liquor thus becomes highly contaminated, however, and can therefore virtually only be used for the preparation of high-grade fertilizer products, if this liquor is subjected to a purification procedure.

In this known method, moreover, the crystallization water liberated in recrystallization and the washing water used if the hemihydrate is washed are taken up in the nitric acid used for the recrystallization and this water should be eliminated in the further processing of the acid diluted in this way.

The process according to the invention includes processing of the crystallization water and any washing water from the hemihydrate to nitric acid, which is used in the process itself in the digestion and the recrystallization. In this way, therefore, this water is, by way of the diluted, nitric acid-containing recrystallization liquor, used functionally for manufacturing part of the required nitric acid.

The recrystallization of the calcium sulphate dihydrate is effected at elevated temperature. For this purpose a temperature of between 40 and 100 $^{o}$C is preferably chosen, more specifically between 60 and 95 $^{o}$C. By setting the recrystallization temperature and selecting the concentration of the nitric acid-containing recrystallization liquor the crystal size and the bulk density of the calcium sulphate hemihydrate formed can be varied. In this way, a hemihydrate product with a crystal length of 5 to 20 µ, a length: diameter ratio of approximately 10, and a bulk density of 610-820 g/litre can be prepared by applying a recrystallization temperature of between 85 and 95 $^{o}$C and an acid concentration of between 45 and 65 wt.%, and preferably a hemihydrate slurry concentration of between 10 and 20 wt.%. A hemihydrate of this kind is very suited for processing to products employable in paper, plastics and paint. By applying a temperature of between 60 and 85 $^{o}$C and an acid concentration of between 45 and 65 wt.%, and preferably a hemihydrate slurry concentration of between 20 and 40 wt.%, a hemihydrate product can be obtained with a crystal length of 40-120 µ, a length: diameter ratio of approximately 10, and a bulk density of 950-1400 g/litre. A hemihydrate of this kind is eminently suitable for the manufacture of constructional elements.

It has also been found that the mean crystal size of the calcium sulphate hemihydrate can be further increased by continuously recirculating part of the slurry formed in recrystallization through the recrystallization zone.

The calcium sulphate hemihydrate formed in recrystallization can be separated from the nitric acid liquor in various ways, for example by filtration, centrifugation.

The separated calcium sulphate hemihydrate can be further processed to final product in a known way.

The invention will be further elucidated in the following examples.

Example 1

Into a glass reaction vessel, provided with a stirrer, 857 gram wet gypsum was introduced. This gypsum was obtained by digesting Khouribga phosphate with 58-wt.-% nitric acid, adding an ammonium sulphate solution and filtering off the gypsum precipitate formed, without after-washing. The liquid content of the gypsum, excluding the water of hydration, was 30 wt.%, over half of which (approx. 55 %) consisted of water and the rest of digestion liquor. The $P_2O_5$ content of the gypsum was approx. 0.7 wt. %, while the $P_2O_5$ content of the gypsum including the adhering liquid was 7.6 wt.%.

To the reaction vessel 750 gram 58-wt.-% nitric acid was added, after which the mixture was stirred for 60 minutes at 60 $^{\circ}$C. Next the mixture was filtered and the filter cake washed with 330 ml hot water.

500 gram calcium sulphate hemihydrate was obtained with a crystal size of 110 $\mu$, a length: diameter ratio of (10-12):1, a bulk density of 1180 g/litre and a $P_2O_5$ content of 0.02 wt.%.

As filtrate, a liquid was obtained with a nitric acid concentration of 39.3 wt.%. The acidic liquor was mixed with the washing water from the hemihydrate washing, resulting in a liquor with a nitric acid concentration of 29.6 wt.%.

This liquor was fed to an absorption column countercurrent to a gas mixture containing nitric oxides obtained by catalytic oxidation of ammonia. The composition of this gas mixture was: 90.32 % $N_2$, 4.44 % $O_2$ . 0.60 % NO, 3.55 % $NO_2$, 1.07 % $N_2O_4$ and 0.02 % inert gases. From the column a liquor with a nitric acid concentration of approx. 58 wt. % was discharged.

Next, 750 gram of this nitric acid was mixed with a new quantity of wet gypsum with the same composition as mentioned above and the mixture recrystallized at approx. 60 °C. The hemihydrate crystals obtained had practically the same dimensions, bulk density and composition as the crystals obtained above.

Example 2

In the same way, 333 gram wet gypsum, obtained by digesting phosphate ore with 59-wt.-% nitric acid and adding an ammonium sulphate solution, was mixed with 537 gram 59-wt.-% nitric acid. The liquid content of the gypsum was 40 wt.% and the $P_2O_5$ content, excluding the $P_2O_5$ in the adhering liquid, 0.7 wt. %. The mixture was stirred for 30 minutes at 90 °C and then filtered off. The filter cake was washed with hot water.

168 gram calcium sulphate hemihydrate was obtained with a crystal size of 7μ, a length:diameter ratio of approx. 10, a bulk density of 790 g/litre, and a $P_2O_5$ content of 0.01 wt. %.

The filtrate, which, including the washing water, had a nitric acid concentration of 38.2 wt.%, was concentrated in the same way as in Example 1 in an absorption column with nitrous gases to a nitric acid concentration of approx. 59 wt.%. Part of this concentrated liquid was used for digesting rock phosphate, after which calcium sulphate dihydrate was precipitated out of the digestion liquor by adding an ammonium sulphate solution. This dihydrate was filtered off and mixed with a liquid containing nitric acid, obtained by mixing 59-wt.-% nitric acid with the remaining part of the previously concentrated nitric acid liquor. The mixture was stirred at 90 °C and filtered off. Hemihydrate crystals were obtained with the same dimensions mentioned above.

Example 3

In the same way as in Example 1, 333 gram wet nitro-gypsum, obtained in digesting Kola phosphate with nitric acid, with a liquid content of 30 wt. % and a $P_2O_5$ content of 0.8 wt.%, was mixed with 467 gram 60-wt.-% nitric acid. The mixture was stirred for 30 minutes at 80 °C and then filtered, after which the filter cake was washed with hot water.

195 gram calcium sulphate hemihydrate was obtained with a crystal size of 60μ, a length:diameter ratio of approx. 10:1, a bulk density of 1060 g/litre and a $P_2O_5$ content of 0.01 wt.%.

The filtrate, which, including the washing water, had a nitric acid concentration of 36.3 wt. %, was concentrated in the same way as in Example 1 with the aid of nitrous gases to a nitric acid concentration of approx. 60 wt. %. Part of the concentrated liquid was used for the recrystallization of a new quantity of nitro-gypsum. The hemihydrate crystals obtained in this process had practically the same dimensions and bulk density as the previously obtained crystals.

The composition was determined of both the nitro-gypsum used in this example and the hemihydrate obtained. The results are shown in the following table. The weight percentages are relative to the weight of dry gypsum/dry hemihydrate.

|  | gypsum | hemihydrate |
| --- | --- | --- |
| $P_2O_5$ | 0.8 wt. % | 0.01 wt. % |
| F | 0.7 wt. % | 0.05 wt. % |
| Org. C-comp. | 0.1 wt. % | <0.01 wt. % |
| $Al_2O_3$ | 0.11 wt. % | 0.01 wt. % |
| $Fe_2O_3$ | 0.3 wt. % | 0.01 wt. % |

Example 4

In the same way as in Example 1, gypsum obtained as a by-product in digestion of Florida phosphate with sulphuric acid, followed by a water-washing, was recrystallized with 62-wt.-% nitric acid at 70 °C to calcium sulphate hemihydrate.

The filtrate resulting after separation of the hemihydrate was concentrated in the aforementioned way to a nitric acid concentration of approx. 62 wt. % with the aid of a gas mixture containing nitric oxides and used anew for recrystallization of a quantity of phospho-gypsum.

The composition of both the phospho-gypsum used and the resulting hemihydrate was determined. The results are given in the table below.

|  | gypsum | hemihydrate |
|---|---|---|
| $P_2O_5$ | 0.7 wt. % | 0.01 wt. % |
| F | 1.2 wt. % | 0.03 wt. % |
| $Al_2O_3$ | 0.4 wt. % | 0.01 wt. % |
| $Fe_2O_3$ | 0.35 wt. % | 0.01 wt. % |
| Org. C-comp. | 0.3 wt. % | <0.01 wt. % |

# C L A I M S

1. Process for preparing calcium sulphate hemihydrate by recrystallizing calcium sulphate dihydrate with the aid of concentrated nitric acid at elevated temperature and separating from the recrystallization liquor the calcium sulphate hemihydrate formed, characterized in that the diluted recrystallization liquor is concentrated through absorption of nitrous gases and the concentrated acidic liquor is at least in part used in the recrystallization.

2. Process according to Claim 1, characterized in that raw calcium sulphate dihydrate obtained by digesting phosphate ore with nitric acid and precipitating the calcium with the aid of a sulphate-containing reagent is recrystallized, and part of the concentrated recrystallization liquor is used for digestion of the rock phosphate.

3. Process according to Claim 2, characterized in that digestion of the phosphate ore is effected with a quantity of nitric acid deficient for conversion to calcium nitrate and phosphoric acid.

4. Process according to Claim 1 or 2, as is substantially described.

5. Calcium sulphate hemihydrate obtained through application of the process according to any one of the foregoing claims.

0021474

European Patent Office

**EUROPEAN SEARCH REPORT**

Application number

EP 80 20 0492

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | CHEMICAL ABSTRACTS, vol. 86, 1977, page 301, abstract 126102d. Columbus, Ohio, USA<br><br>& DD - A - 118 219 ( G. KEMPE et al. ) ( 20-02-1976)<br><br>-- | | C 01 F 11/46<br>C 04 B 11/02 |
| A | CHEMICAL ABSTRACTS, vol.80,no.4,1974, page 273, abstract 18832j. Columbus, Ohio, USA<br><br>& JP - A - 73 17157 (MITSUBISHI CHEMICAL INDUSTRIES CO. LTD.) ( 26-05-1973)<br><br>-- | | TECHNICAL FIELDS SEARCHED (Int.Cl. 3)<br><br>C 01 F 11/46<br>C 04 B 11/02 |
| A | DE - A - 2 310 460 (GEBR. KNAUF WESTDEUTSCHE GIPSWERKE)<br><br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 03-09-1980 | LIBBERECHT-VERBEECK |

EPO Form 1503.1  06.78